# EUROPEAN PATENT APPLICATION

(11) **EP 4 707 038 A1**
(43) Date of publication of application: **11.03.2026**
(21) Application number: 25188844.2
(22) Date of filing: 10.07.2025
(51) Int. Cl.: B60L 15/20, B60K 1/02, B60W 30/00, F16H 57/04

(54) **THERMAL MANAGEMENT SYSTEM OF A DUAL-MOTOR ELECTRIC AXLE**

(30) Priority: 05.08.2024 IT 202400018349
(71) Applicant: FPT Industrial S.p.A., 10156 Torino (IT)
(72) Inventor: CONTARDI, Mattia, 10156 Torino (IT); BACIGALUPO, Emiliano, 10156 Torino (IT)
(74) Representative: Fiume, Orazio

(57) **Abstract**

Thermal management system for a dual-motor electric axle, wherein the axle (A) comprises a pair of vehicular wheels (W1, W2), a first electric motor (EM1) and a second electric motor (EM2) operatively connected to said pair of wheels (W1, W2) by means of an oil-lubricated transmission (GB), the system comprising a processing unit (ECU) configured to selectively control said first and second electric motor and configured to acquire a target torque value having a first sign, to control the first motor to deliver a first torque value in agreement with said first sign and greater than the target value and control the second electric motor to deliver a second torque value discordant with said first sign so that a third torque value given by an algebraic sum of said first and second torque values equals said target torque value, as long as an oil temperature value is lower than a predetermined threshold.

## Description

### Field of the invention

The present invention relates to the field of thermal management systems of a dual motor electric axle.

### State of the art

In the field of electric propulsion, private cars are the most advanced.

Cars have very different performance requirements than heavy-duty vehicles. Specifically, cars require low torque and relatively high-top speeds, while heavy-duty vehicles require high torque and relatively low top speeds. High-performance electric propulsion motors have been developed for automobiles, capable of reaching very high rotational speeds. In some cases, these motors certainly exceed 10,000 rpm and often reach 30,000 rpm or more.

In heavy-duty vehicles, such fast motors require reduction ratios of at least 1:30.

A complex reduction system also requires a particularly efficient lubrication circuit.

As long as the oil is reaching the correct operating temperature, the performance of the drive axle is reduced. Typically, an axle management device is configured to limit the maximum rotation speed of the electric motors to limit transmission wear.

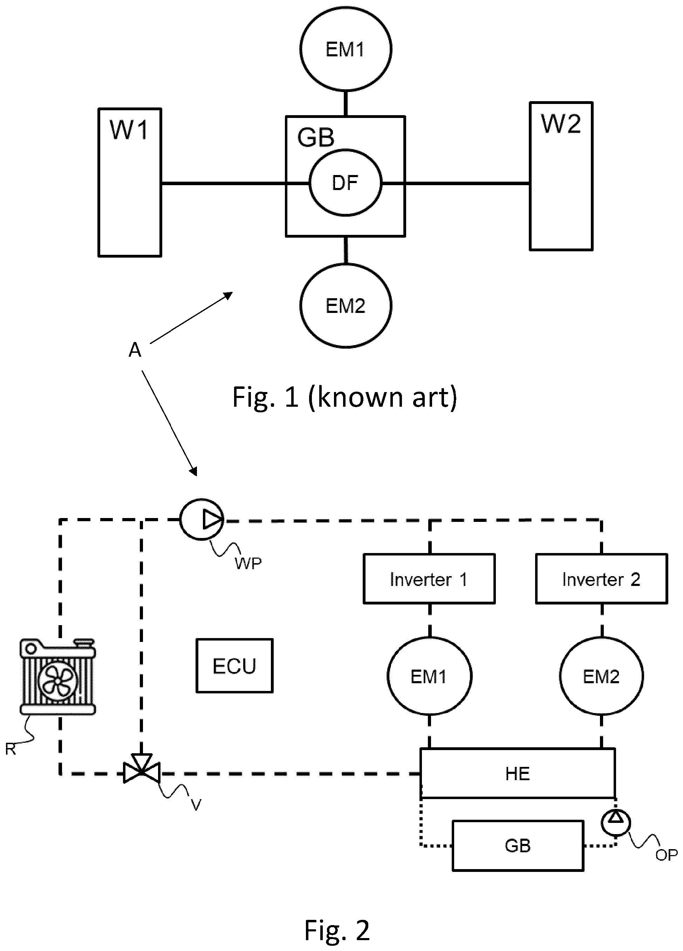

Solutions such as the one shown in Figure 1 of the prior art are known, in which two electric motors EM1 and EM2 are operationally connected to a common differential DF, which is configured to rotate the wheels W1 and W2. The differential DF is depicted inside a block GB that may contain a common reduction gear for both electric motors or a reduction gear for each of the electric motors.

Unless specifically excluded in the detailed description that follows, the descriptions in this chapter are to be considered an integral part of the detailed description.

### Summary of the invention

The purpose of this invention is to propose a thermal management system for a dual-motor electric axle capable of accelerating the heating of the axle transmission lubricating oil.

The basic idea of this invention is to acquire a target positive torque value required by the electric axle and control a first electric motor to deliver a first positive torque value greater than the target value, and to control a second electric motor to deliver a second negative torque value so that a third positive torque value overall delivered by the electric axle is equal to said target positive torque value.

This is advantageously achieved when an oil temperature value is below a predetermined threshold. The term "when" indicates a causal relationship, in the sense that the strategy is adopted "in response" to the detection of a lubricating oil temperature below a predetermined threshold.

The first motor can therefore be defined as the "traction motor," while the second motor can be defined as the "braking motor."

Evidently, this method can be performed as long as the target positive torque value is lower than a predetermined torque value that can be delivered by the traction motor. It is worth noting that for short periods, electric machines can deliver a torque value greater than the rated torque value; therefore, for short periods, the torque that can be delivered by the traction motor can exceed a relative rated torque value.

The "rated" torque value that can be delivered by an electric motor means the maximum torque value that can be continuously delivered.

In other words, the torque delivered by the axle corresponds to the required torque; however, the braking motor delivers a resistive torque that must be compensated for by the traction motor to meet the required target torque, defined as the positive torque target value.

Advantageously, the resistive torque generated by the braking motor translates into increased frictions, which leads to more rapid heating of the transmission lubricating oil.

The same concept expressed here can also be implemented in regenerative braking conditions, that is, when the target torque value is negative.

Therefore, when the target torque value is negative, the first braking motor is called upon to deliver a braking action that exceeds the target torque, since the second traction motor delivers a traction torque that is greater than the inertia of the vehicle itself.

For convenience, the following description only covers the first operating condition, i.e., when the target torque is positive, with the understanding that the invention can also be implemented under regenerative braking conditions. According to another aspect of the invention, when the axle is equipped with a water-cooling circuit and the oil lubrication circuit has a heat exchanger configured to exchange heat with the water-cooling circuit, then part of the electrical losses are also recovered. Indeed, an increase in the torque delivered by the traction motor leads to a significant increase in electrical losses, which are recovered by the water-cooling circuit, which is thermally interconnected with the lubrication circuit, with a clear advantage.

The dependent claims describe preferred variants of the invention and form an integral part of this description.

### Brief description of the figures

Further purposes and advantages of the present invention will become clear from the following detailed description of an embodiment thereof (and its variants) and the accompanying drawings, which are provided purely for explanatory and non-limiting purposes, in which:
Fig. 1 shows a prior art diagram of an electric axle equipped with a pair of electric motors operationally connected to vehicle wheels via a differential;
Fig. 2 shows a first diagram of a first variant of a dual-motor electric axle according to the present invention;
Fig. 3 shows a second diagram of a second variant of a dual-motor electric axle according to the present invention.

The plan views are flattened to facilitate understanding of the diagrams. In other words, the half-lines described above are made coplanar.

The same reference numbers and letters in the figures identify the same elements, components, or functions.

It should also be noted that the terms "first," "second," "third," "upper," "lower," and the like may be used here to distinguish various elements. These terms do not imply a spatial, sequential, or hierarchical order for the modified elements unless specifically indicated or inferred from the text.

The elements and features illustrated in the various preferred embodiments, including the drawings, may be combined without departing from the scope of protection of this application as described below..

### Detailed description of preferred embodiments

The present invention relates to an electric axle A equipped with a pair of electric motors EM1, EM2 operationally connected to a differential DF arranged to rotate a pair of vehicle wheels W1, W2. Between the electric motors and the differential DF, there may be at least one reduction gear. The combination of the reduction gear and the differential is generically referred to as the transmission, denoted by the symbol GB. In other words, the transmission, which includes the differential DF and optionally at least one reduction gear, is housed inside the casings. Therefore, the differential and the transmission are housed in a single casing.

According to a preferred variant of the invention, the electric motors are permanently connected to the transmission and cannot be disconnected from it. Preferably, the electric motors are identical in both construction and rated power.

Fig. 2 shows the axle schematically depicted in Fig. 1 from a thermal perspective view.

Specifically, the transmission GB is operationally connected to a heat exchanger HE, which cools the lubricating oil.

An ECU is configured to control the electric motors individually. According to the present invention, the ECU is configured to acquire a target positive torque value CT required by the electric axle and control the first electric motor EM1 to deliver a first positive torque value CT1 greater than the target value, and to control the second electric motor to deliver a second negative torque value CT2 so that a third positive torque value CTR resulting from the electric axle is equal to the target positive torque value CT.

In other words, CT = CTR = CT1 + CT2, keeping in mind that the second torque value CT2 is negative.

Advantageously, the negative torque and the greater positive torque, with the greater losses introduced, allow for the generation of thermal energy that brings the lubricating oil to a more favourable operating temperature more quickly.

The oil lubrication circuit may include a pump OP for circulating oil through the transmission and through a heat exchanger HE, arranged to cool the lubricating oil.

If the heat exchanger HE is of the air/oil type, during the oil heating phase, the pump OP can be controlled to facilitate heating of the lubricating oil.

According to a further aspect of the invention, axle A may include a water-cooling circuit arranged to cool the electric motors EM1 and EM2. It is advantageous to thermally interconnect the cooling circuit with the lubrication circuit so that the water helps the oil heating.

For this purpose, the heat exchanger EH may be of the water/oil type rather than of the air/oil type. Advantageously, the electrical energy required to generate the aforementioned negative torque and the corresponding positive torque required to compensate for the negative torque, generates thermal energy through the Joule effect which is collected by the refrigeration circuit operationally interfaced with the lubrication circuit.

In other words, the heat exchanger HE is used, at least during the initial phases of axle operation, not to dissipate heat from the lubricating oil, but rather to heat the lubricating oil. In this case, the pump OP can be kept operational even while the lubricating oil is heating. According to a further aspect of the invention, additional thermal energy can be recovered from the inverters "Inverter 1" and "Inverter 2," generally used to control the individual power supplies of the electric motors, EM1 and EM2, respectively.

It is known that inverters generate heat due to the switching of power transistors; therefore, thanks to a variant of the invention, this thermal energy can also be recovered to heat the lubricating oil. Preferably, the inverters are also cooled by the water refrigeration circuit. More specifically, it is preferred that the water circulates first through the inverters, then through the electric motors, and finally through the heat exchanger HE. The water-cooling circuit, regardless of the variants described above, includes a radiator R and a pump WP that allows water to circulate through the radiator R to disperse heat to the outside environment.

According to a further preferred aspect of the invention, the water-cooling circuit is equipped with a thermostatic valve V o that can be controlled to exclude the radiator R from the circuit. This is advantageous in allowing the oil to be heated via the water-cooling circuit.

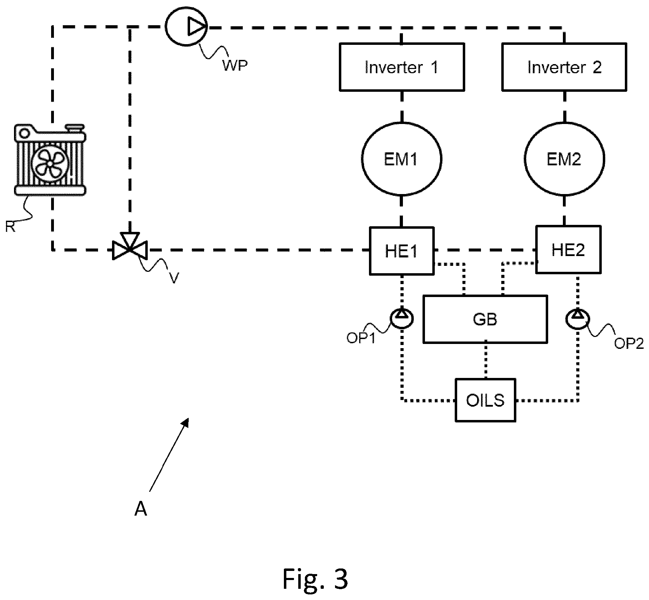

Fig. 3 shows another variant of the present invention.

It differs in that the transmission GB includes an oil sump OILS in which the oil is collected and from which the oil is sucked to be sent to two heat exchangers HE1 and HE2, respectively, relating to the electric motors EM1 and EM2.

For this purpose, two oil recirculation pumps OP1 and OP2 are provided.

This is advantageous considering that the traction electric motor is required to generate a torque value, in absolute terms, higher than the braking motor and therefore, it may be advantageous to control the related oil pump OP1 differently from pump OP2.

According to a further preferred aspect of the invention, the transmission is implemented as shown in application EP4238797, which is incorporated by reference.

The following table shows an example of an implementation of the present invention.:

| | Standard MAP | | Modified MAP | |
|---|---|---|---|---|
| Target torque | Torque EM1 | Torque EM2 | Torque EM1 | Torque EM2 |
| 0 Nm | 0 Nm | 0 Nm | 0 Nm | 0 Nm |
| 100 Nm | 50 Nm | 50 Nm | 900 Nm | - 800 Nm |
| 250 Nm | 125 Nm | 125 Nm | 900 Nm | - 650 Nm |
| 500 Nm | 250 Nm | 250 Nm | 900 Nm | - 400 Nm |
| 1000 Nm | 500 Nm | 500 Nm | 500 Nm | 500 Nm |
| 1500 Nm | 750 Nm | 750 Nm | 750 Nm | 750 Nm |

The first column lists possible target torque values, the second and third columns report the torque values that must be delivered by the first and second electric motors, respectively, as a function of the target torque of the same row under standard conditions, and the fourth and fifth columns report the torque values that must be delivered by the first and second electric motors, respectively, as a function of the target torque of the same row under oil heating conditions, i.e., when the lubricating oil temperature is below a predetermined threshold.

Standard conditions, on the other hand, mean that the oil temperature is above the predetermined threshold.

Assuming a motor rated torque is 1000 Nm, the initial torque delivered by the traction motor can be close to the rated value, for example, 900 Nm. Therefore, when any torque lower than 900 Nm is required, during the lubricating oil warming phase, the traction motor delivers 900 Nm, while the braking motor delivers a second negative torque value such that the axle, as a whole, satisfies the request represented by the target torque value.

For convenience, this value of 900 Nm close to the rated torque value is hereinafter referred to as the "guard value."

It is worth noting that an electric motor, for short periods of time, can deliver a torque greater than the rated torque. However, tests have shown that delivering a torque greater than the rated value can lead to rapid deterioration of the individual transmission. Therefore, the guard torque value should preferably be between 85% and 95% of the rated torque value.

According to a preferred variant of the invention, the trigger value, rather than being fixed, varies inversely with the lubricating oil temperature, so as to progressively reduce the heating strategy when the oil temperature approaches the selected threshold value.

This aspect also offers the benefit of greater temperature control, as an abrupt interruption of the heating strategy could be delayed, leading to unnecessary overheating of the lubricating oil. Conversely, when the target torque value equals or exceeds the trigger value, both electric motors cooperate to satisfy the request, each delivering positive torque. Preferably, the target torque is split between the two electric motors.

Preferably, the rotations between the traction motor and the braking motor are cyclically reversed.

The two electric motors do not necessarily have to be capable of delivering the same rated torque value. However, the present invention can be implemented in the same way, taking into account the differences between the two electric motors.

It can be seen that the table is divided into a left portion indicated by the "Standard Map," which is implemented when the oil temperature exceeds a predetermined value, for example, 25°C, and a right portion indicated by the "Modified Map," which is implemented when, according to the present invention, the oil temperature is below the predetermined threshold.

The present invention can advantageously be implemented using a computer program that includes coding means for implementing one or more method steps when this program is executed on a computer. Therefore, it is intended that the scope of protection extends to said computer program and also to computer-readable media comprising a recorded message, said computer-readable media comprising program coding means for implementing one or more method steps when said program is executed on a computer.

Embodiments to the non-limiting example described are possible, without departing from the scope of protection of the present invention, including all embodiments that, for a person skilled in the art, are equivalent to the content of the claims.

From the above description, the person skilled in the art is able to realize the object of the invention without introducing further construction details.

## Claims

1. Axle (A) comprises a pair of vehicle wheels (W1, W2) defining a right wheel (W1) and a left wheel (W2), a first electric motor (EM1) and a second electric motor (EM2) operatively connected to said pair of wheels (W1, W2) by means of a single oil-lubricated transmission (GB), and comprising an oil thermal management system, wherein the system comprises an electronic processing unit (ECU) configured to selectively control said first and second electric motors and configured to
- acquire a target torque value having a first sign,
- control the first motor to deliver a first torque value in accordance with said first sign and greater than the target value, and
- control the second electric motor to deliver a second torque value discordant with respect to the first sign, such that a third torque value given by an algebraic sum of said first and second values equals said target torque value;
as long as an oil temperature value is below a predetermined temperature threshold.

2. System according to claim 1, wherein the processing unit is configured to control said first and second motors to deliver a first and second torque value, respectively, that are in agreement with each other so that said third torque value, given by an algebraic sum of said first and second values, equals said target torque value, when said oil temperature value is greater than or equal to said predetermined temperature threshold.

3. System according to any of claims 1 or 2, wherein the processing unit is configured to set said first torque value equal, in absolute value, to a guard value that is lower, in absolute value, than a rated torque value of the first motor.

4. System according to claim 3, wherein said guard value is close to the rated torque value and preferably between 85% and 95% of the rated value.

5. System according to claim 4, wherein said trigger value is inversely proportional to the oil temperature value.

6. System according to any of claims 3-5, wherein when the target torque value exceeds said trigger value, the processing unit is configured to control said first and second motors to deliver a first and second torque value, respectively, wherein the first and second torque values have the same sign and are equal to said first sign.

7. System according to claim 6, wherein said first and second values coincide.

8. System according to any of the preceding claims, wherein said target torque value can be a driving torque and therefore positive or a resisting torque and therefore negative.

9. System according to any of the preceding claims, wherein the first electric motor is equipped with a first electric pump (OP1) and the second electric motor is equipped with a second electric pump (OP2), and wherein the processing unit is configured to control said first and second pumps in a differentiated manner proportionally to said first and second torque values, in absolute terms.

10. Heavy-duty vehicle (VEH) comprising
- a dual-motor electric axle (A), wherein the axle (A) comprises a pair of vehicular wheels (W1, W2), a first electric motor (EM1) and a second electric motor (EM2) operatively connected to said pair of wheels (W1, W2) via an oil-lubricated transmission (GB),
- an electronic processing unit (ECU) configured to selectively control said first and second electric motors and configured to
- acquire a target torque value having a first sign,
- control the first motor to deliver a first torque value consistent with said sign and greater than the target value, and
- control the second electric motor to deliver a second torque value discordant with respect to the first sign, such that a third torque value given by an algebraic sum of said first and second values equals said target torque value;
when an oil temperature value is below a predetermined temperature threshold.

11. A vehicle according to claim 10, wherein when the vehicle is accelerating, said target torque value is positive, while when it is regenerative braking, said target torque value is negative.

12. A method for thermally managing a dual-motor electric axle, wherein the axle (A) comprises a pair of vehicular wheels (W1, W2), a first electric motor (EM1), and a second electric motor (EM2) operatively connected to said pair of wheels (W1, W2) via an oil-lubricated transmission (GB), the method comprising the following steps in cyclical sequence:
- Acquiring a target torque value having a first sign,
- Controlling the first motor to deliver a first torque value consistent with said first sign and greater than the target value, and
- Controlling the second electric motor to deliver a second torque value discordant with respect to the first sign, such that a third torque value given by an algebraic sum of said first and second values equals said target torque value;
when an oil temperature value is below a predetermined temperature threshold.

13. A computer program comprising instructions for causing the processing unit of claim 1 to implement the method of claim 12.

14. A computer-readable medium having stored the program of claim 13.
